# EUROPÄISCHE PATENTANMELDUNG

(11) **EP 1 968 174 A1**
(43) Veröffentlichungstag der Anmeldung: **10.09.2008**
(21) Anmeldenummer: 07090039.4
(22) Anmeldetag: 07.03.2007
(51) Int. Cl.: H02K 41/03, H02K 9/00, H02K 3/24, H02K 5/20

(54) **Neuartiges Gleit- und Kühlsystem in einem Linearmotor**

(71) Anmelder: Janke, Michael, 12487 Berlin (DE)
(72) Erfinder: Janke, Michael, 12487 Berlin (DE)
(74) Vertreter: Boeckh, Tobias

(57) **Zusammenfassung**

Die Erfindung betrifft eine neuartige elektrische Maschine, insbesondere die neue Anordnung von Spulen/Segmenten, verbunden mit einem neuen Gleitlager- und Kühlsystem in dem Motor, insbesondere einem 3-Phasen Synchron- Linearmotor mit Permanentmagneten. Die Form der ferromagnetischen Zähne ist so ausgeführt, dass keine Wicklungen der elektrischen Spule überstehen. Die Endzähne des Motorläufers sind 1,59 mal dicker als die mittleren Zähne des Motorläufers. Diese Endzähne sind allseitig zum Ende hin verjüngt. Das Kühlsystem besteht aus Kanälen zur Ein- und Durchleitung von Kühlmedien. Diese Kanäle verbinden in Kombination der Teile untereinander den Innenraum von Zähnen, Spulen und Gleitlagerkörper so, dass Zähne, Spulen, Gleitlagerkörper, Permanentmagnete und Gegenlager gleichzeitig und/oder nacheinander gekühlt werden. Dadurch werden alle Bauteile die sich im Motor befinden innen und außen direkt gekühlt.

## Beschreibung

Die Erfindung betrifft eine neuartige elektrische Maschine, insbesondere die neue Anordnung von Spulen/Segmenten, verbunden mit einem neuen Gleitlager- und Kühlsystem in dem Motor, insbesondere einem Linearmotor.

Aus dem Stand der Technik sind verschiedene Linearmotoren einschließlich der in Ihnen verwendeten Gleitlager und Kühlsysteme bzw. mit der für Linearmotoren typischen Anordnung der Spulen bekannt.

So beschreibt beispielsweise die DE 101 50 520 eine elektrische Maschine als Teil eines Direktantriebes, die aus einer Anordnung von zusammensteckbaren Segmenten mit Spulen und ferromagnetischen Komponenten besteht, wobei in den ferromagnetischen Komponenten gleichzeitig ein magnetischer Transversal- und Longitudinalfluss erzeugt wird. Die ferromagnetischen Komponenten besitzen dabei mindestens zwei Arme mit unterschiedlicher räumlicher Ausrüstung, von denen mindestens ein Arm mit Spule als Spulenkern und einer ohne Spule als Polelement ausgestattet ist. Diese so ausgebildeten Segmente werden auf eine Art und Weise verbunden, dass auf ein Segment mit Zahn, alternierend bezüglich jeder räumlichen Ausrichtung der Arme, ein Segment mit einem Polelement folgt. Zum einen kann die elektrische Maschine im Falle einer eindimensionalen Ausrichtung der Segmente durch einen Rahmen umschlossen sein. Im Falle einer flächenhaften Ausgestaltung kann die Bewegung eines aufliegenden Schlittens in verschiedene Raumrichtungen ermöglicht werden, der beweglich entlang der elektrischen Maschine gelagert ist und durch den magnetischen Fluss beschleunigt wird.

Nachteilig an der bisherigen Anordnung der Spulen ist, dass die Anordnung der Spulen die Gestaltung der Lagerung des bewegten Teils des Motors (Läufer) in seiner räumlichen Anordnung und in seiner Stabilität sehr einschränkt. Gleichzeitig ist die zielgerichtete Leitung der Kühlluft oder anderer Kühlmedien nicht zu gewährleisten, da der vorhandene Bauraum zu klein ist. Insbesondere, dass das Kühlmedium direkt nur zur kühlenden Wärmequelle (Spule) geleitet wird, ist mit dem bisherigen Konstruktionsprinzip nicht gegeben. Bei üblichen Linearmotoren werden nur die überstehenden Windungsköpfe der Spulen gekühlt, gegebenenfalls noch der Eisenköper indem die Spulen untergebracht sind aber nicht die Spulen komplett über ihre Oberflächen.

Aufgabe der vorliegenden Erfindung war es insbesondere, eine Anordnung von Spulen bzw. Segmenten zu finden, die die Gleitlagerung und die Kühlung der Spulen völlig neu durchführt und die Nachteile des Standes der Technik beseitigt. Die Aufgabe wird durch die Ansprüche gelöst; vorteilhafte Ausführungsformen ergeben sich insbesondere aus den Unteransprüchen. Ein Aspekt der Erfindung liegt in einer Kombination der Gleitlagerung und der Kühlung mit der Hilfe von Kühlmedien.

Gelöst wird diese Aufgabe dadurch, dass insbesondere in einem Linearmotor gegenüber einem Permanentmagnetpol entweder ein Segment (Zahn) ohne Spule oder ein Zahn mit Spule angeordnet vorliegt. Ein bevorzugter Aspekt beispielsweise ist eine neue Anordnung von Spulen/Segmenten, bei der bevorzugt nur noch Segmente (Zähne) gegenüber Permanentmagnetpolen angeordnet sind. Hierbei sind die Spulen zwischen den Segmenten positioniert. Die Anordnung erfolgt hierbei alternierend/abwechselnd, wobei auf ein Segment eine Spule folgt und auf eine Spule ein Segment, gefolgt wiederum von einer Spule u. s. w..

So wird die jeweilige Spule durch ein innen liegendes, durch die Spule geschobenes, Rohr mit der Hilfe des durchfließenden Kühlmediums gekühlt. Gleichzeitig wird die Spule über die gesamte äußere Fläche durch ausströmendes Medium gekühlt. Die neue innovative Lösung kommt dadurch zustande, dass das Kühlmedium, das die Spulen kühlt auch durch den Körper des Gleitlagers fließt. Es wird damit die Kühlung des Lagerkörpers gesichert. Mit dieser Kühlung wird die Wärmedehnung des Lagers auf das gewollte Maß eingestellt und konstant gehalten. Die Wirkungsweise des Motors, seine Qualität und sein Verschleißverhalten werden entscheidend verbessert. Darüber hinaus geling es die Kühlluft für die äußere Kühlung der Spulen gleichzeitig für die Oberflächenkühlung der Permanentmagnete und der Gegenlager zu nutzen. Mit dieser umfangreichen Nutzung des Kühlmediums gelingt es effektiv und kontrolliert die Kühlung des Linearmotors für alle Komponenten zu sichern. Daraus wurde die Kombination eines besonderen Gleitlager- und Kühlsystems erfunden.

Ein weiterer Aspekt der Erfindung ist der, dass die Endzähne bevorzugt 1,59 mal dicker sind als die Zähne in der Mitte. Die Endzähne sind allseitig (vierseitig) von außen nach innen verjüngt. Die besondere Aufbauweise der Zähne, welche radial zur Bewegungsrichtung nach allen 4 Seiten des Quadrates gerichtet sind erfordert, dass diese Verjüngung auch allseitig nach allen 4 Seiten stattfindet Damit können Überraschenderweise die Rastkräfte minimiert werden. Die Verjüngungskontur ist bevorzugt ein Radius der in der Ausführungsform so groß ist wie der Betrag, um den der Zahn dicker ist als die mittleren Zähne. Gegenüber einer rotierenden elektrischen Maschine ist die linear arbeitende elektrische Maschine endlich und erzeugt auch dadurch nachteiligerweise ruckartig zeigende Kräfte. Diese Kräfte werden mit dieser allseitigen Verjüngung und der Endzahnverdickung vermindert. Diese Verdickung des Endzahnes ist auf beiden Seiten (vorn und hinten) des Motorläufers angebracht und erreicht mit der allseitigen Verjüngung ein allmähliches, stufenloses Abschwächen, bzw. Ansteigen der wirkenden magnetischen Feldkräfte in den Endstücken des Motorläufers.

In einer bevorzugten Ausführungsform ist die Spule in alternierenden Abständen auf einem Segmentschenkel aufgewickelt. Um diese Anordnung, bestehend aus Spule und Segmentschenkel, sind Permanentmagnete wie beispielsweise bei der elektrischen Maschine des Standes der Technik gemäß DE 101 50 520 angeordnet. Es war völlig überraschend, dass mit dieser neuen Anordnung erreicht werden kann, dass die Spule mit Ihrer Kupferdrahtwicklung innerhalb des Eisen-(Zahn-Segment)Körpers verbleibt. Vorteilhafterweise können hierdurch die so genannten Kupferverluste minimiert werden, die regelmäßig dort entstehen, wo Kupferdrahtwicklungen über den Eisenkörper hinausragen.

Es war völlig überraschend, dass die erfindungsgemäße Anordnung der Spulen genutzt werden kann, um ein neuartiges Gleit- und Kühlsystem insbesondere in einem Linearmotor zu konstruieren. Bisher sind Kühlung und das Gleitlager eines Motors eigenständige Systeme innerhalb eines Linearmotors. Erfindungsgemäß wird jeweils das gleiche gasförmige oder fluide Mittel, insbesondere Kühlmittel, bevorzugt mit gleicher Einspeisung für die Kühlung wie auch für die Lagerung der wesentlichen bewegten Teile bevorzugt eines Linearmotors verwendet. Das Gleitlager ist demgemäß sowohl Lagerkörper für das Gleitlager als auch Medienführung für das Kühlmedium insbesondere über Kanäle, wodurch die Kupferspulen des Motors außen durch partielle Öffnungen allseitig gekühlt werden. Hierbei wird das Kühlmedium zuerst durch das Innere eines Motorgrundkörpers geführt, um dann im Gleitlager an die Spulenoberfläche zu gelangen. Hierbei ist es bevorzugt, dass das Kühlmedium insbesondere Luft ist. Weiterhin ist es vorteilhaft, wenn der Motorgrundkörper aus wärmeleitenden Grundstoffen wie Eisen, Kupfer, Bronze, Aluminium oder Legierungen hieraus besteht. Die Leitung des Kühlmediums erfolgt insbesondere über verschiedenartig ausgestaltete Kanäle. Dem Fachmann ist die Ausgestaltung derartiger Kanäle bekannt. Vorteilhafterweise wird durch diese erfindungsgemäße Führung des Kühlmediums erreicht, dass dieses in einem ersten Schritt den Motorgrundkörper, in einem zweiten Schritt das Gleitlager und in einem dritten Schritt außen die Kupferspulen an den äußeren Flächen kühlt. Bei der Kühlung des Gleitlagers wird durch das eintretende Medium erreicht, dass der Gleitwiderstand der im Gleitlager bewegten Teile vorteilhafterweise gesenkt wird. So kann die Kühlluft, die die Kanäle der Gleitlager durchströmt auch durch Öffnungen in der Gleitlagerfläche austreten. Damit gelingt es erfindungsgemäß ein Luftpolster zwischen den Gleitlagerflächen aufzubauen. Es wird somit der Gleitwiderstand herabgesetzt. Durch Verwirbelung der austretenden Luft werden in Folge sowohl die Oberflächen der Spulen als auch der Permanentmagnete gekühlt. Das hat den gleichen Effekt, als trete die Luft direkt über den Spulen aus.
Wenn das Kühlmedium, welches im Sinne der Erfindung gleichzeitig auch immer das Gleitlagermedium ist, beispielsweise Luft ist, strömt diese über den Spalt der Gleitlagerflächen oder über den Spulen aus und gelangt vorteilhafterweise auch auf die gegenüberliegenden Permanentmagnete im Linearmotor, die von den Spulenkörpern im Abstand von 0,5 bis 2,0 mm angebracht sind. Daher werden durch die erfindungsgemäße Lehre vorteilhafterweise auch die Permanentmagnete mitgekühlt. Vorteilhafterweise führt dieser Abstand dazu, dass die Spulenkörper besonders effektiv gekühlt werden.

In einer besonderen Ausführungsform der Erfindung ist die Form der ferromagnetischen Zähne so ausgeführt, dass keine Wicklungen der elektrischen Spulen überstehen.

Ein weiterer Aspekt der Erfindung besteht also darin, durch Kanäle im Motorgrundkörper mit einer möglichst großen Wärmetauscherfläche Wärme abzuführen und durch weiterführende Kanäle im Gleitlagerkörper ebenfalls durch eine möglichst große Wärmetauscherfläche Wärme aufzunehmen und durch partielle Öffnungen in den Kanälen das Umspülen der Kupferspulen außen mit Kühlmedium auszuführen, um sowohl den Motorblock innen, das Gleitlager innen, die Kupferspulen und die Permanentmagnete außen gleichzeitig zu kühlen. Die Kupferspulen werden so allseitig gekühlt, da gleichzeitig innen über dem Motorblock und an den Spulen außen Wärme abgeführt wird. Hierdurch erhöht sich vorteilhafterweise die Leistung des Motors (Primärkühlung). Das ausströmende Kühlmittel, insbesondere Luft, kühlt gleichzeitig die Gleitlagerung und die Oberflächen der Permanentmagnete (Sekundärkühlung). Die Wärmedehnung des Motorblocks und die Wärmedehnung der Gleitlager werden vorteilhafterweise verringert und auf eine definierte Betriebstemperatur eingestellt. Es ist ein besonderer Vorteil der Erfindung, dass hierdurch der Verschleiß des Gleitlagers geringer wird, da die Verluste aus den Reibekräften der Gleitlager minimiert werden. In einem weiteren Aspekt der Erfindung kann durch Kühlung der Permanentmagnete die Feldstärke in ihrem maximalen Leistungsspektrum gesichert werden (</= 80° C). Die Durchflussmenge, der Druck und die Durchflussgeschwindigkeit des Kühlmediums können vorteilhafterweise gemäß dem Bedarf des Motors bezüglich einer definierten Betriebstemperatur geregelt werden (effektiver Luftmengeneinsatz).

Die Erfindung betrifft also die Verwendung eines Kühlsystems in einem Linearmotor, wobei mit dem Kühlmedium nacheinander und/oder gleichzeitig die Innenkörper und/oder Außenkörper einer Spule, ein ferromagnetischer Körper des Linearmotors, ein Gleitlager des Linearmotors und/oder ein Permanentmagnet gekühlt werden. Überraschend hat sich gezeigt, dass die gleichzeitige Verwendung des Kühlmediums zu einer besonders effektiven und überraschend guten Kühlung führt.

Bevorzugte Kühlmittel sind Luft, Wasser, Öl, Wasser-Öl-Emulsionen, insbesondere mit Glykol-Zusätzen.

In einer vorteilhaften Ausführungsform der Erfindung erfolgt die Kühlung der Innenkörper und Außenkörper der Spulen, der ferromagnetischen Körper, der Gleitlager und der Permanentmagnete gleichzeitig. Vorteilhafterweise führt die gleichzeitige Kühlung dazu, dass unerwünschte Temperaturmodifikationen (durch Hitzeausdehnung) effizienter als im Stand der Technik reduziert werden können.

In einer weiteren vorteilhaften Ausführungsform der Erfindung wird das Kühlmedium, welches zur Kühlung der Gleitlager verwendet wird, auch für die Verminderung eines Reibungswiderstandes während der Gleitlagerung eingesetzt. Es war überraschend, dass das Kühlmedium verwendet werden kann, um den Gleitwiderstand herabzusetzen. Vorteilhafterweise wird durch die Kühlung im Sinne der Erfindung eine Wärmedehnung der Gleitlager konstant gehalten.

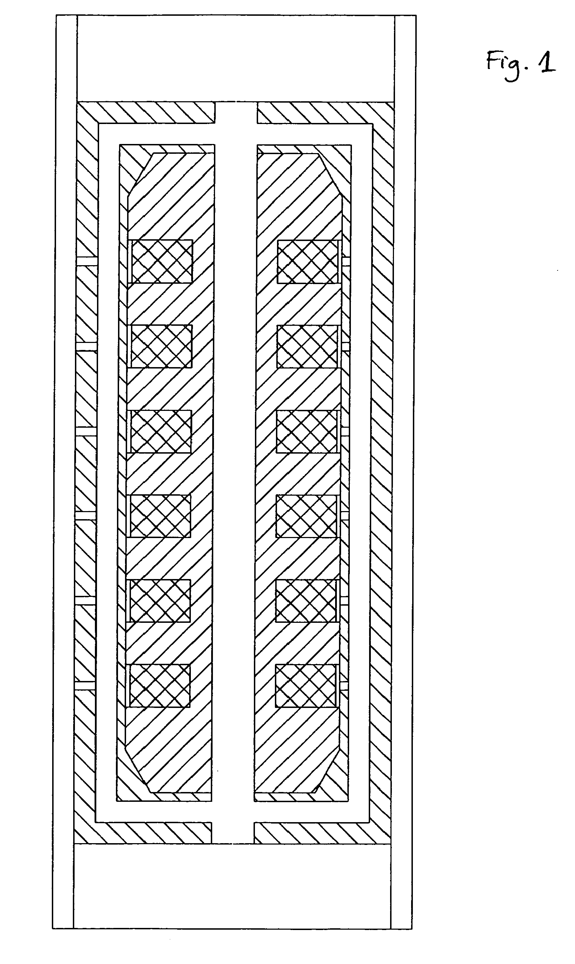

In einem weiteren Aspekt betrifft die Erfindung einen Linearmotor (siehe Fig. 1; Motor mit Gleitlager und Kühlung), umfassend ein Gleitlager und ein Kühlsystem, wobei der Linearmotor bevorzugt ein 3-Phasen-Synchron-Linearmotor, ein Motor mit einem im wesentlichen quadratischen Querschnitt und vierseitig angeordneten Permanentmagneten, umfassend eine Anordnung von alternierend in Reihe angeordneten ferromagnetischen Zähnen und elektrisch geschalteten Spulen, welche durch das Gleitlager in Bewegungsrichtung geführt werden, ist. Es war überraschend, dass ein Linearmotor mit diesem Aufbau in Bezug auf Effizienz und Sicherheit besonders vorteilhafte Eigenschaften aufweist.

In einer vorteilhaften Ausführungsform der Erfindung ist die o. g. Anordnung der Zähne, der Spulen und des Gleitlagers mit einem Kühlkanal-System verbunden. Vorteilhafterweise ist so eine überraschende Effizienzsteigerung des Motors möglich.

In einer weiteren bevorzugten Ausführungsform der Erfindung ist der erfindungsgemäße Linearmotor so ausgebildet, dass das Kühlkanalsystem die Zähne, die Spulen und das Gleitlager innen und außen kühlt, insbesondere über die Kühlkanäle und über die Oberfläche der Körper, insbesondere durch Konvektion mit dem Kühlmedium.

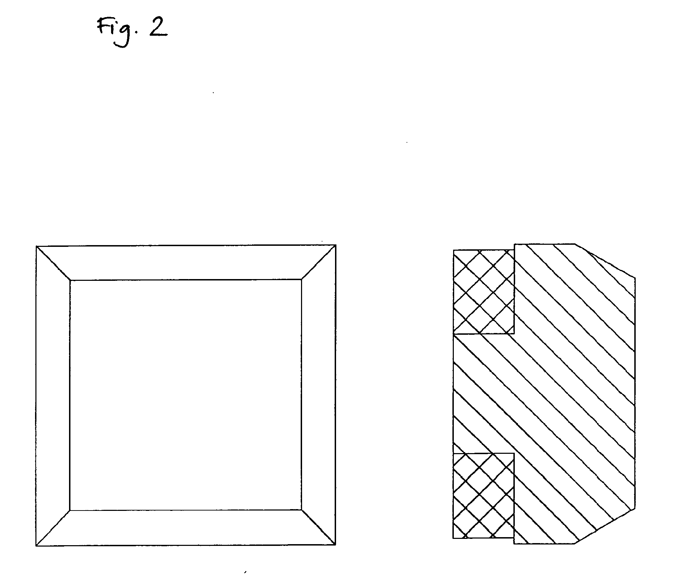

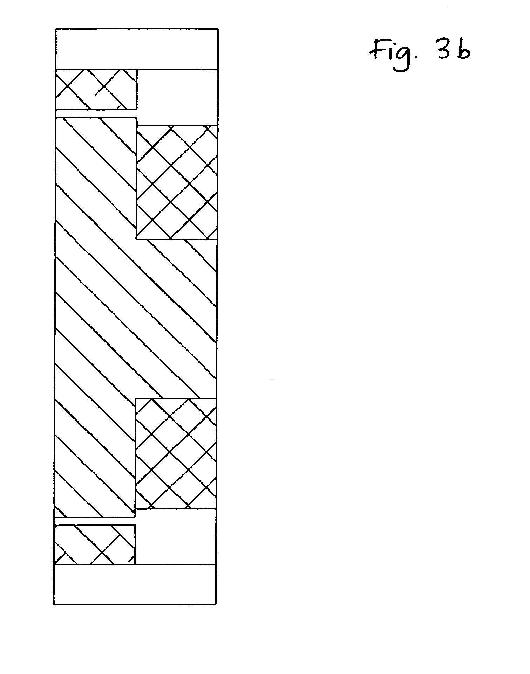

In einer weiteren bevorzugten Ausführungsform der Erfindung ist vorgesehen, dass die in Reihe angeordneten ferromagnetischen Zähne und die Spulen an den Seiten mit einem 1,2 bis 2,0 mal, bevorzugt 1,59 mal dickeren Zahn als die mittleren Zähne enden (siehe Fig. 2; die abgebildete einfach schraffierte, sich vierseitig verjüngende Struktur stellt einen 1,59 mal dickeren Zahn dar; gegenüber dem Zahn wie in Fig. 3b; Zahn und Spule alternierend).

In einer weiteren bevorzugten Ausführungsform der Erfindung ist vorgesehen, dass sich die dickeren Zähne zum äußeren Ende nach allen vier Seiten allseitig verjüngen.

In einer weiteren bevorzugten Ausführungsform der Erfindung ist vorgesehen, dass die Verjüngung im Radius um den Betrag, um den die Endzähne dicker sind als die mittleren Zähne, erfolgt ist.

In einer weiteren bevorzugten Ausführungsform der Erfindung ist vorgesehen, dass die Verjüngung durch schräge, ebene oder gekrümmte Flächen erfolgt, die die Verjüngung in einem Winkel >0° und <90° durchführt.

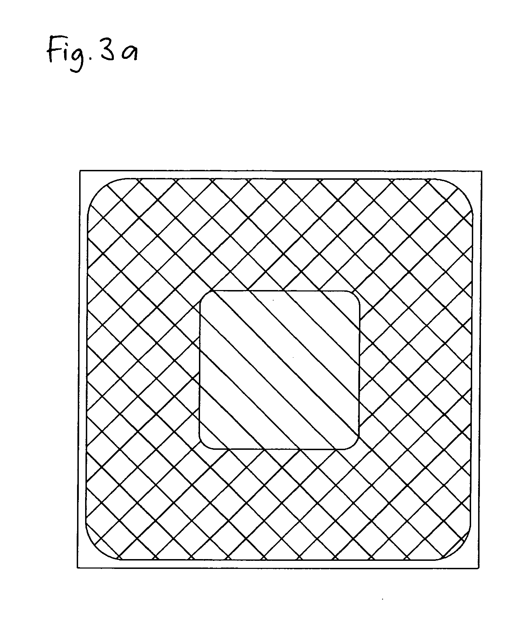

In einer weiteren bevorzugten Ausführungsform der Erfindung ist vorgesehen, dass die ferromagnetischen Zähne mit einem abgewinkelten Schenkel, auf den die elektrische Spule gewickelt wird, die Außenmaße der Spule überdecken, wobei die Außenmaße der Spulenform durch die Seiten des Quadrats der Zahnform begrenzt werden (siehe Fig. 3a, 3b; a = ferromagnetischer Körper überdeckt die Spule).

In einer weiteren bevorzugten Ausführungsform der Erfindung ist vorgesehen, dass die Anordnung der Kühlkanäle in einem offenen oder einem geschlossenen Kühlkreislauf erfolgt.

In einer weiteren bevorzugten Ausführungsform der Erfindung ist vorgesehen, dass in dem offenen Kühlkreislauf das Kühlmedium frei ausströmen kann.

In einer weiteren bevorzugten Ausführungsform der Erfindung ist vorgesehen, dass in dem geschlossenen Kreislauf das Kühlmedium über die Kühlkanäle in den Motorraum hinein- und hinausführbar ist.

In einer weiteren bevorzugten Ausführungsform der Erfindung ist vorgesehen, dass das Kühlmedium, welches durch die Kühlkanäle im offenen oder geschlossenen Kreislauf geführt wird, ausgewählt ist aus der Gruppe Luft, Wasser, Öl und/oder eine Kühlemulsion.

In einer weiteren bevorzugten Ausführungsform ist vorgesehen, dass der Motorquerschnitt und damit die Magnete/Eisenkörper neben einer quadratischen Grundform auch andere Formen aufweisen, wie Dreieck, Zylinder, sternförmig, T-förmig, oder aber L- oder U-förmig sein können, oder aber die Form eines kartesischen Kreuzes aufweisen. Weiterhin kann es bevorzugt sein, dass der Motorquerschnitt und bevorzugt damit die Magnete und Eisenkörper geteilt oder geschlossen vorliegen.

In einer weiteren bevorzugten Ausführungsform der Erfindung liegen diese Formen der Querschnitte in Kombination miteinander vor. Im Sinne der Erfindung kann der Motorquerschnitt und insbesondere damit die Magnete/Eisenkörper jede beliebige Form annehmen.

Die anmeldungsgemäße Lehre zeichnet sich durch folgende Merkmale aus:
- Abkehr vom technisch Üblichen
- neue Aufgabenstellung
- Vorliegen eines seit langem ungelösten dringenden Bedürfnisses für die Lösung des mit der Erfindung gelösten Problems
- bisheriges vergebliches Bemühen der Fachwelt
- die Einfachheit der Lösung spricht für erfinderische Tätigkeit, insbesondere da sie kompliziertere Lehren ersetzt
- Entwicklung der wissenschaftlichen Technik ging in eine andere Richtung
- entwicklungsstraffende Leistung
- Fehlvorstellungen der Fachwelt über die Lösung des entsprechenden Problems (Vorurteil)
- technischer Fortschritt, wie z. B.: Verbesserung, Leistungssteigerung, Verbilligung, Ersparnis an Zeit, Material, Arbeitsstufen, Kosten oder schwer beschaffbaren Rohstoffen, erhöhte Zuverlässigkeit, Beseitigung von Fehlern, Qualitätshebung, Wartungsfreiheit, größere Effektivität, höhere Ausbeute, Vermehrung der technischen Möglichkeiten, Bereitstellung eines weiteren Mittels, Eröffnung eines zweiten Weges, Eröffnung eines neuen Gebietes, erstmalige Lösung einer Aufgabe, Reservemittel, Alternativen, Möglichkeit der Rationalisierung, Automatisierung oder Miniaturisierung oder Bereichung des Arzneimittelschatzes
- glücklicher Griff, da aus einer Vielzahl von Möglichkeiten eine bestimmte gewählt wurde, deren Ergebnis nicht vorausgesagt werden konnte, daher handelt es sich um ein patentwürdigen glücklichen Griff)
- Irrtum in Entgegenhaltungen
- junges Gebiet der Technik
- Kombinationserfindung, d.h. mehrere bekannte Elemente werden zu einer Kombination zusammengeführt, die einen überraschenden Effekt aufweist
- Lizenzvergabe
- Lob der Fachwelt und
- wirtschaftlicher Erfolg.

Es war völlig überraschend, dass mit der anmeldungsgemäßen Lehre eine geringe Wärmedehnung aller Bauteile, insbesondere Lager, Führungsbahn, Läufer und Gehäuse realisiert werden kann, wobei hieraus eine hohe Genauigkeit der Führung resultiert und es wird ein Verzug oder ein Verdrillen der Führungsbahn verhindert. Daraus folgt vorteilhafterweise, dass ein geringeres Lagerspiel als im Stand der Technik eingestellt werden kann und demgemäß bessere Leistungen erreicht werden können. Weiterhin kommt es durch die Optimierung der Kühlung zu einem geringeren Leistungsverlust des Motors gegenüber den bekannten Mitteln des Standes der Technik, wodurch höhere elektrische Ströme angewendet und höhere Leistungen erreicht werden können.

Im Folgenden soll die Erfindung anhand von Beispielen und einer Zeichnung näher erläutert werden, ohne allerdings auf diese Zeichnung oder das Beispiel beschränkt zu sein.

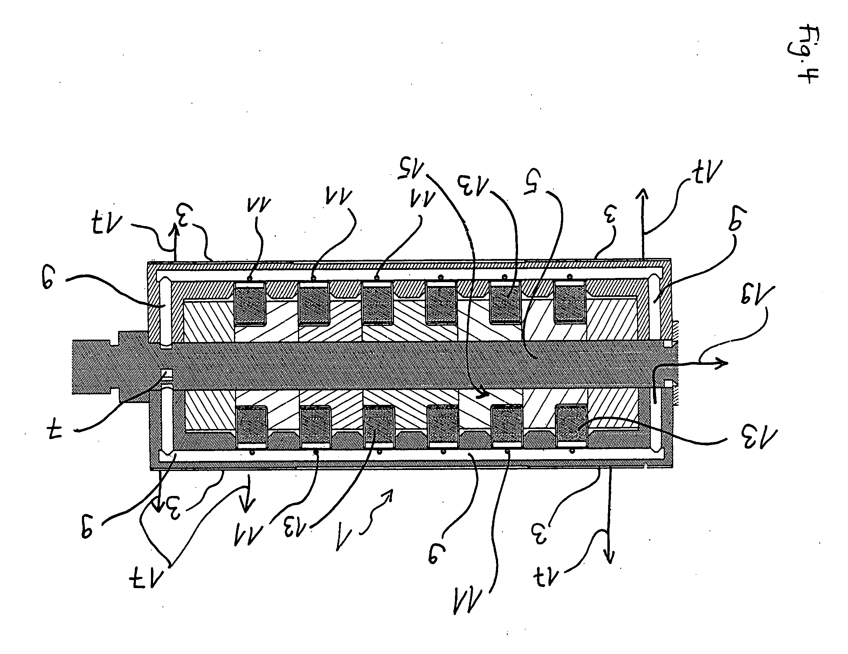

Figur 4 zeigt den Schnitt durch einen Linearmotor 1. Der Linearmotor 1 weist Gleitlager 3 auf. Durch eine Bohrung innerhalb des Rohrs 5 wird ein Kühlmedium wie z. B. Luft in den Linearmotor 1 geführt. Das Kühlmedium dringt durch die Öffnung 7 des Rohrs 5 in den Kanal 9 ein. Durch die Einleitung des Kühlmediums in den Kanal 9 ist es möglich, dass das Kühlmedium an die Oberfläche der Spulen gelangt. Dies erfolgt über die Kanalöffnungen 11. Über die Kanalöffnungen 11 kann das Kühlmedium direkt an die alternierend angeordneten Kupferspulen 13 geführt werden. So kühlt das Kühlmedium zuerst den Motorgrundkörper 15, anschließend über eine nicht dargestellte Öffnung die Gleitlager 3 und anschließend über die Kanalöffnung 11 die Kupferspulen 13 an ihren äußeren Flächen. An den Gleitlagern 3 tritt das Kühlmedium in Richtung der Pfeile 17 nach außen. Durch die Kühlung der Kupferspulen 13 wird ebenfalls erreicht, dass die gegenüber diesen positionierten Permanentmagnete ebenfalls gleichzeitig von außen gekühlt werden. Das Kühlmedium kann in Richtung des Pfeils 19 rückgeführt werden.

## Patentansprüche

1. Verwendung eines Kühlmediums, bevorzugt in einem offenen Kühlkreislauf, in einem Linearmotor,
**dadurch gekennzeichnet, dass**
mit dem Kühlmedium nacheinander und/oder gleichzeitig ein Innenkörper und/oder ein Außenkörper einer Spule, ein ferromagnetischer Körper des Linearmotors, ein Gleitlager des Linearmotors und/oder ein Permanentmagnet gekühlt werden.

2. Verwendung nach Anspruch 1,
**dadurch gekennzeichnet, dass**
die Kühlung der Innenkörper und der Außenkörper der Spulen, der ferromagnetischen Körper, der Gleitlager und der Permanentmagnete gleichzeitig erfolgt.

3. Verwendung nach Anspruch 1 oder 2,
**dadurch gekennzeichnet, dass**
das Kühlmedium, welches zur Kühlung der Gleitlager verwendet wird, auch für die Verminderung eines Reibungswiderstandes während der Gleitlagerung eingesetzt wird.

4. Verwendung nach einem der vorhergehenden Ansprüche,
**dadurch gekennzeichnet, dass**
durch die Kühlung eine Wärmedehnung der Gleitlager konstant gehalten wird.

5. Linearmotor umfassend ein Gleitlager und ein Kühlsystem,
**dadurch gekennzeichnet, dass**
der Linearmotor, bevorzugt ein 3-Phasen-Synchron-Linearmotor, ein Motor mit einem im wesentlichen quadratischen Querschnitt und vierseitig angeordneten Permanentmagneten, umfassend eine Anordnung von alternierend in Reihe angeordneten ferromagnetischen Zähnen und elektrisch geschalteten Spulen, welche durch das Gleitlager in Bewegungsrichtung geführt werden, ist.

6. Linearmotor nach dem vorhergehenden Anspruch,
**dadurch gekennzeichnet, dass**
die in dem vorhergenannten Anspruch offenbarte Anordnung der Zähne, der Spulen und des Gleitlagers mit einem Kühlkanalsystem miteinander verbunden ist.

7. Linearmotor nach einem der vorhergehenden Ansprüche,
**dadurch gekennzeichnet, dass**
das Kühlkanalsystem die Zähne, die Spulen und das Gleitlager innen und außen kühlt, insbesondere über die Kühlkanäle und über die Oberfläche der Körper, insbesondere durch Konvektion mit dem Kühlmedium.

8. Linearmotor nach einem der vorhergehenden Ansprüche,
**dadurch gekennzeichnet, dass**
die in Reihe angeordneten ferromagnetischen Zähne und die Spulen an den Seiten mit einem 1,2 bis 2,0 mal, bevorzugt 1,59 mal dickeren Zahn als die mittleren Zähne enden.

9. Linearmotor nach dem vorhergehenden Anspruch,
**dadurch gekennzeichnet, dass**
sich die dickeren Zähne zum äußeren Ende nach allen vier Seiten allseitig verjüngen.

10. Linearmotor nach dem vorhergehenden Anspruch,
**dadurch gekennzeichnet, dass**
die Verjüngung im Radius um den Betrag, um den die Endzähne dicker sind als die mittleren Zähne, erfolgt ist.

11. Linearmotor nach einem der vorhergehenden Ansprüche,
**dadurch gekennzeichnet, dass**
die Verjüngung durch schräge, ebene, gekrümmte oder stufenförmige Flächen erfolgt, die die Verjüngung in einem Winkel >0° und <90° durchführt.

12. Linearmotor nach einem der vorhergehenden Ansprüche,
**dadurch gekennzeichnet, dass**
die ferromagnetischen Zähne mit einem abgewinkelten Schenkel, auf den die elektrische Spule gewickelt wird, die Außenmaße der Spule überdecken, wobei die Außenmaße der Spulenform durch die Seiten des Quadrats der Zahnform begrenzt werden.

13. Linearmotor nach einem der vorhergehenden Ansprüche,
**dadurch gekennzeichnet, dass**
die Anordnung der Kühlkanäle in einem offenen oder einem geschlossenen Kühlkreislauf erfolgt.

14. Linearmotor nach dem vorhergehenden Anspruch,
**dadurch gekennzeichnet, dass**
in dem offenen Kühlkreislauf das Kühlmedium frei ausströmen kann.

15. Linearmotor nach einem der vorhergehenden Ansprüche,
**dadurch gekennzeichnet, dass**
in dem geschlossenen Kreislauf das Kühlmedium über die Kühlkanäle in den Motorraum hinein- und hinausführbar ist.

16. Linearmotor nach einem der vorhergehenden Ansprüche,
**dadurch gekennzeichnet, dass**
das Kühlmedium, welches durch die Kühlkanäle im offenen oder geschlossenen Kreislauf geführt wird, ausgewählt ist aus der Gruppe Luft, Wasser, Öl und/oder eine Kühlemulsion.
